# EUROPEAN PATENT SPECIFICATION

(11) **EP 3 270 617 B1**
(45) Date of publication and mention of the grant of the patent: **18.03.2020**
(21) Application number: 16179789.9
(22) Date of filing: 15.07.2016
(51) Int. Cl.: H04W 8/12, H04W 4/02, H04W 24/08

(54) **A METHOD AND SYSTEM FOR OUTBOUND/INBOUND ROAMING MARKET SHARE ESTIMATION**
VERFAHREN UND SYSTEM ZUR AUS-/EINGEHENDEN ROAMINGMARKTANTEILSCHÄTZUNG
PROCÉDÉ ET SYSTÈME D'ESTIMATION DE PART DE MARCHÉ D'ITINÉRANCE ENTRANT/SORTANT

(43) Date of publication of application: 17.01.2018
(73) Proprietor: BICS SA/NV, 1030 Brussel (BE)
(72) Inventor: Istrati, Gabriel, 300762 Timisoara Timis (RO); Madhusoodanapanicker, Arun, 1200 Bruxelles (BE)
(74) Representative: IP HILLS NV

(56) References cited:
- US-A1- 2002 086 671
- US-B2- 9 338 663
- "3rd Generation Partnership Project; Technical Specification Group Services and System Aspects; Functional stage 2 description of Location Services (LCS) (Release 12)", 3GPP STANDARD; 3GPP TS 23.271, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.1.0, 20 June 2014 (2014-06-20), pages 1-169, XP050774105, [retrieved on 2014-06-20]

## Description

### Field of the Invention

The present invention generally relates to the estimation of roaming market shares for mobile network operators. The invention more particularly concerns the estimation of outbound roaming market shares, i.e. the distribution of outbound roamers of a particular host mobile network over visited mobile networks in one or more visited country or geographical area, and the estimation of inbound roaming market shares, i.e. the distribution of inbound roamers in a given country or geographical area across the different mobile networks available there. The outbound roaming market share information tells a host network operator which networks his subscribers are using when they are roaming abroad. The inbound market share information tells a network operator what part of the incoming (visiting) roamers he is serving in comparison to competitive network operators active in the country or geographical area of that network operator.

### Background of the Invention

Several mechanisms have been described in literature for outbound roaming market share estimation and for inbound roaming market share estimation. These mechanisms are usually designed to be applied by a single network operator, rely on information that is available in the registers of that single network operator or on analysis of direct signalling to/from that single network operator's network, and deliver roaming market share information that is only relevant for that single network operator. These existing methods in general lack accuracy since they typically rely on the limited visibility that a single network operator has on outbound/inbound roaming, whereas roaming is a phenomenon that by definition involves plural operators.

International patent application WO 2012/131553 describes a method for inbound roaming market share estimation that relies on analysing SMS traffic between roaming subscribers of the host network operators and roaming subscribers of competitive operators. International patent application WO 2006/058586 describes a method to determine the relative distribution of inbound roamers over competitive networks that relies on analysis of the SS7 signalling related to SMS communication. The technique described in WO 2006/058586 is similar to that of WO 2012/131553. Both are disadvantageous because there is a need for a certain volume of SMS traffic as a result of which the time to establish a result may be long. It is in other words impossible to generate real-time or instant information on the inbound roaming market shares through these known techniques.

International patent application WO 2011/005170 describes a system with monitoring nodes that monitor SS7 signalling to detect roaming events. Upon detection of a roaming event, an action is taken. The main purpose of the SS7 signalling monitoring is to steer roaming, i.e. to control the selection of a preferred visited network. WO 2011/005170 also discloses an embodiment wherein the action taken corresponds to the collection and storage of statistics such as the amount of roaming events, the duration of roaming, etc.

Despite the absence of accurate techniques to estimate outbound/inbound roaming market shares, there is a general need with mobile operators to obtain accurate information on the outbound/inbound roaming activity. Knowledge of the outbound roaming market shares provides a host operator a better view on the roaming traffic that is generated by its outbound roamers in certain geographical areas. Such knowledge enables the host operator to verify if roaming contracts with network operators in these geographical areas are respected, to negotiate better roaming tariffs in case the roaming traffic generated by its outbound roamers exceeds certain contractual thresholds, and/or enables the host operator to steer outbound roamers towards alternate available mobile networks in certain geographical areas to reduce inter-operator roaming costs and/or to better respect contractual obligations. Accurate outbound roaming market share information also assists a host operator in identifying commercial opportunities, like for instance the identification of countries or geographical areas where the host operator's outbound roamers do not optimally benefit from promotions of certain network operators, like for instance price reductions on SMS or MMS traffic. Further, accurate inbound roaming market share information is of utmost importance to a mobile network operator to have a view on competitor activity in his own country or geographical area, to verify if foreign mobile operators respect existing roaming agreements, to negotiate more favourable inter-operator pricings on roaming traffic and consequently generate more revenues, and/or to negotiate with foreign mobile network operators the implementation of techniques for steering of roaming towards the mobile operator's network when outbound roaming subscribers of those foreign mobile network operators are present in the geographical area of the mobile operator.

International patent application WO 2009/018534 entitled "Method and System for Providing Roaming Intelligence (RI) to a Host Network Operator for its Roaming Traffic" describes a method for outbound roaming market share estimation from page 21, line 25 to page 23, line 17, and a method for inbound roaming market share estimation from page 13, line 31 to page 21, line 24, that constitute the best existing solution.

To determine the outbound roaming market share, WO 2009/018534 somehow estimates the volume of traffic exchanged between the host mobile network and the visited network. This volume of traffic may be estimated by monitoring the stay period of outbound roamers in visited networks. Thereto, the time difference is calculated between the Location Update signalling and Cancel Location signalling. The stay period of outbound roamers hence is considered indicative for the volume of traffic that is generated by the outbound roamer in the visited network. Alternatively, the amount of call events, messaging events or CAMEL mobile originated events may be counted and used to estimate the volume of traffic generated by outbound roamers in a visited network.

The technique known from WO2009/018534 requires knowledge of the outbound roamers and is therefore only suitable to be implemented by a host network operator who has access to the registers of the host network that contain information on the presence of its subscribers and therefore knows who the outbound roamers are. The technique known from WO2009/018534 cannot be implemented by inter-operator carriers that handle traffic between mobile networks in plural countries or geographical areas. Such an inter-operator carrier may desire to estimate the outbound roaming market share for one or several of its clients, e.g. a host operator in one particular country, but the inter-operator carrier has limited or even no visibility on which subscribers are roaming and the visited networks where such roaming subscribers are in, because the traffic from/to such roaming subscriber may pass through alternate channels. The inter-operator carrier may even have no visibility at all on a certain geographical area whereas its customer, the host mobile network operator, may be interested in the outbound roaming market share in such geographical area. Further, the method for outbound roaming market share estimation known from WO 2009/018534 is disadvantageous in that it produces only relative values reflecting the distribution of outbound roamers of the host network across visited networks. It does not produce absolute values.

WO 2009/018534 further describes a method for inbound roaming market share estimation that is entirely different and therefore cannot easily be integrated with the method for outbound roaming market share estimation. The inbound roaming market share estimation method of WO 2009/018534 consists in generating a sample set of inbound roamers that have previously roamed in the host mobile network. Knowledge that the inbound roamers were previously roaming with the host mobile network is available from historical data. A randomly selected sample set of such inbound roamers of sufficient size to achieve a certain level of confidence is then considered. Periodically, location queries are issued to the sample set of previous inbound roamers to discover the (new) location of these previous inbound roamers. Different location polling methods may be applied, e.g. based on SRI-SM, ATI, SRI or SRI-GPRS messaging. The distribution of the selected inbound roamers across different mobile networks available in the geographical area of the host network is derived from the replies to the location requests. The ratio of subscribers present in each network versus the total number of subscribers polled in the sample set may be used to estimate the inbound roaming market share of each mobile network in the considered geographical area. Alternatively, the stay period of each polled subscriber may be taken into account by repeating the polling methods regularly, e.g. every 15 minutes, and recording the stay period of polled subscribers in respective mobile networks.

The inbound roaming market share estimation method known from WO 2009/018534 lacks accuracy because it is implemented by the operator of the host mobile network and consequently generates sample sets that contain only inbound roamers that have previously roamed with the host mobile network. Inbound roamers that have never roamed before with the host mobile network are not considered as a result of which the market shares of competitive mobile networks available in the geographical area of the host mobile network are systematically underestimated. The systematic underestimation and inaccuracy inherent to this known method may be substantial when roaming is steered by foreign network operators towards competitive mobile networks in the geographical area under consideration. Further, the preferred method described in WO 2009/018534 based on stay period monitoring is disadvantageous as it regularly polls inbound roamers, e.g. every 15 minutes, to determine their stay time on visited networks. Such regular polling generates substantial additional signalling and may be privacy intrusive for subscribers that are selected to form part of the sample set.

### Summary of the Invention

It is an objective of the present invention to resolve one or more of the above identified shortcomings of existing solutions for outbound and/or inbound roaming market share estimation. More particularly, it is an objective of the present invention to disclose a method and system for outbound/inbound roaming market share estimation that is more accurate, that can be implemented by inter-operator carriers to estimate the outbound/inbound roaming market shares for plural customers, i.e. plural host mobile networks operational in one or more geographical areas, with minimal intrusion, i.e. minimal additional signalling to/from roaming subscribers. It is a further objective to enable outbound/inbound roaming market share estimation, even for mobile networks where an inter-operator carrier has no visibility on and in geographical areas where an inter-operator carrier has no customer.

According to the present invention, the above defined objectives are realized by the method for outbound/inbound roaming market share estimation by an inter-operator carrier as defined by claim 1, wherein the inter-operator carrier operates an interconnect facility that interconnects mobile communication networks, the method comprising estimation of the distribution of outbound roamers of a home mobile communication network over visited mobile communication networks in one or more geographical area, wherein the inter-operator carrier has a contract with at least one of the visited mobile communication networks to handle a percentage of its international traffic, the method comprising:
a. maintaining frequent roamer information for subscribers of the home mobile communication network comprising maintaining a frequent roamer score for subscribers of the home mobile communication network and changing status of a subscriber for a predetermined time period from non-frequent roamer to frequent roamer when the frequent roamer score exceeds a predetermined threshold;
b. generating a sample set of frequent outbound roamers of the home mobile communication network;
c. polling each mobile subscriber in the sample set of frequent outbound roamers with a location request, wherein a location request is a query message to the mobile subscriber requesting to reply with location details;
d. analysing replies to the location request received from the sample set of frequent outbound roamers to determine therefrom geographical areas and visited mobile communication networks wherein the frequent outbound roamers of the sample set are located;
e. determining a relative distribution of outbound roamers of the home mobile communication network across geographical areas and/or visited mobile communication networks from analysis of the replies received as the percentage of frequent outbound roamers in the sample set of frequent outbound roamers located respectively in the geographical areas and/or visited mobile communication networks.

Thus, the present invention relies on maintenance of a database of frequent roamers, and location polling for a sample set of frequent roamers of the home mobile network under consideration. The distribution of the replies to the location requests over the foreign networks in one or plural foreign countries or areas can be used as relative outbound roaming market shares for the operator of the home mobile network under consideration. The method does not require knowledge of which subscribers are outbound roaming as it just polls a sample set of frequent roamers. The method also does not rely on the monitoring of Location Update, Cancel Location messages, or alternate signalling that enables to determine stay times in visited networks. The method just uses replies to location requests and instantly calculates therefrom the relative outbound roaming market shares for the host network operator. A single location request is sufficient. The so obtained outbound roaming market shares are accurate, even if the inter-operator carrier that calculates them has no view on the visited networks or geographical areas where the outbound roamers are residing.

The frequent roamer status of a subscriber may depend on a frequent roamer score that is regularly updated. When the frequent roamer score exceeds a certain threshold, the subscriber is considered to be a frequent roamer and consequently may be selected for sample sets that are polled through a location request. The frequent roamer score may automatically decrease at a fixed page, e.g. every three months. As a consequence, a frequent roamer may lose its frequent roomer status after 3 months when no new events have occurred that increase its frequent roamer score.

Embodiments of the method for outbound/inbound roaming market share estimation according to the present invention, defined by claim 2, further comprise:
f. obtaining footprint information indicative for a percentage of ingoing/outgoing roaming traffic to/from at least one visited mobile communication network that an inter-operator carrier is supposed to handle according to contracts between the inter-operator carrier and its customers, the at least one visited mobile communication network;
g. measuring an amount of roaming traffic to/from the at least one visited mobile communication network handled by the inter-operator carrier, hence corresponding to the percentage;
h. determining from the percentage and the amount of roaming traffic handled by the at least one visited mobile communication network a total volume of roaming traffic to/from the home mobile communication network as the quotient of the amount of roaming traffic and the percentage; and
i. determining from the relative distribution and the total volume of roaming traffic an absolute volume of roaming traffic generated by outbound roaming subscribers of the home mobile communication network in geographical areas and/or in visited mobile communication networks in such geographical areas as the product of the total volume and the relative distribution.

This way, by using so called footprint information, i.e. marketing information where an inter-operator carrier is knowledgeable on as it can be extracted from contracts between the inter-operator carrier and its customers, the relative outbound roaming market shares can be turned into absolute outbound roaming traffic volumes handled by the different foreign visited networks. Indeed, when an inter-operator carrier is knowledgeable on the percentage of ingoing/outgoing roaming traffic of a mobile network operator that he is supposed to handle, the inter-operator carrier can measure the exact ingoing/outgoing volume of traffic that corresponds to this percentage. By dividing the actually measured traffic volume by the supposed percentage it represents, the total amount of roaming traffic to/from the mobile communication network under consideration can be determined. By multiplying this total amount of roaming traffic with the relative outbound market share distribution determined in steps a-e here above, the total volume of roaming traffic generated by outbound roamers of the home mobile communication network is calculated and the absolute volumes of roaming traffic generated by outbound roamers of the home mobile communication network under consideration in the different visited networks and/or visited geographical areas are determined. The distribution of outbound roamers and roaming traffic generated by outbound roamers hence can be estimated, even for visited networks or countries that are invisible to the inter-operator carrier because the inter-operator carrier has no customers there.

In embodiments of the method for outbound/inbound roaming market share estimation according to the present invention, defined by claim 3, the predetermined time period corresponds to 3 months and the predetermined threshold corresponds to 2 roaming events in the past 3 months in one or multiple geographical areas.

Thus, in an example implementation, a subscriber will be considered a frequent roamer when more than one roaming event have been detected in the past 3 months. As soon as 3 months lapse wherein no or only one roaming event has been detected, the subscriber will be removed from the frequent roamer database such that the subscriber no longer can be selected for location polling and outbound roaming market share estimation.

In embodiments of the method for outbound/inbound roaming market share estimation according to the present invention, defined by claim 4, the steps a, b, c, d and e are repeated iteratively.

Indeed, the outbound roaming market share figures that result from steps a, b, c, d and e may be updated regularly to reflect the actual situation and stay accurate. The steps a, b, c, d and e may therefore be re-executed periodically, i.e. at a fixed pace, or they may be re-executed on request of the home mobile network operator or inter-operator carrier.

In embodiments of the method for outbound/inbound roaming market share estimation according to the present invention, defined by claim 5, the steps a-e are repeated daily.

Indeed, in a preferred embodiment of the invention, daily updates are generated of the outbound roaming market share figures.

In further embodiments of the method for outbound/inbound roaming market share estimation according to the present invention, defined by claim 6, the step b comprises excluding polled subscribers of the home mobile communication network for a certain period of time from being polled again.

This way, it is avoided that the same frequent roamer becomes polled plural times within a short time frame. The additional signalling from/to a single frequent roamer hence is limited, and the privacy intrusion of a single frequent roamer remains guaranteed as it becomes impossible this way to flood a single frequent roamer with location requests.

In further embodiments of the method for outbound/inbound roaming market share estimation according to the present invention, defined by claim 7, the step c comprises one of:
- sending the location request from a Location Based Service node selected by an operator of the home mobile communication network;
- sending the location request from a Location Based Service node selected by an inter-operator carrier handling roaming traffic to/from the home mobile communications network; or
- sending the location request from a Location Based Service node operated by an inter-operator carrier handling roaming traffic to/from the home mobile communications network who acts as Location Based Service provider.

Indeed, in preferred embodiments of the present invention Location Based Service or LBS based polling is used to obtain information on the current location of a frequent roamer. LBS based polling involves sending a location query message from an LBS node to the frequent roamer. The LBS node receives the reply to this location query message and thereupon must report the reply to the facility that calculates the outbound roaming market shares, e.g. a statistics processor with an inter-operator carrier. For the LBS node, three options exist: the LBS node may be selected by the home network operator, the LBS node may be selected by the inter-operator carrier, or the LBS node may be operated by the inter-operator carrier acting as LBS service provider.

According to an advantageous aspect of the present invention, as defined by claim 8, the method for outbound/inbound roaming market share estimation further comprises estimation of a distribution of inbound roamers over mobile communication networks in a given geographical area, comprising:
j. collecting transposed signalling, wherein transposed signalling is signalling to/from a mobile communication network in the given geographical area, the signalling being visible for an inter-operator carrier and indirectly indicating that mobile subscribers are present in the geographical area, the transposed signalling comprising Location Update Failure messages and/or Cancel Location messages and/or Diameter messages sent to and/or from mobile subscribers in a mobile communication network in the geographical area;
k. generating a sample set of the mobile subscribers from the transposed signalling;
I. polling each mobile subscriber in the sample set with a location request; and
m. analysing replies to the location request received from the sample set of subscribers to obtain a distribution of the sample set of subscribers over the mobile communication networks.

Thus, in addition to estimating the outbound roaming market share through a technique based on location polling for a sample set of frequent roamers, the present invention may be supplemented with estimation of the inbound roaming market share for a geographical area through location polling for a sample set of subscribers that is constituted via transposed signalling. The techniques for inbound roaming market share estimation and outbound roaming market share estimation hence apply similar steps, i.e. active location polling on a sample set of subscribers, and therefore can be integrated easily in a single platform that is for instance controlled by an inter-operator carrier. Other than direct signalling, i.e. the signalling that a mobile network operator can monitor to establish where a certain subscriber is roaming, the transposed signalling constitutes signalling that is available to an inter-operator carrier and indirectly indicates that a subscriber is possibly or likely roaming in the given geographical area where inbound roaming market share estimation is desired. The transposed signalling for instance comprises Location Update Failure (LU Failure) messages. When an inter-operator carrier detects such LU Failure signal in the mobile network of an operator active in the geographical area and relying on the inter-operator carrier for the handling of international traffic, i.e. a customer of the inter-operator carrier, the inter-operator carrier can assume that the mobile device is likely roaming in the geographical area of interest, probably in the network of a competitive operator. By sending a location request to such mobile subscriber, certainty is obtained on the location of the subscriber. Similarly, a Cancel Location message detected in the network of a mobile operator active in the geographical area of interest is an indication that the subscriber is likely roaming in the network of a competitive operator in that same geographical area. A subscriber issuing such Cancel Location message hence is a good candidate for location polling. In summary, transposed signalling enables the inter-operator carrier to constitute a list or database of inbound roamers that are likely present in the geographical area of interest. Location polling enables to obtain certainty on the location of a sample set of such subscribers, and the distribution of inbound roamers across the different mobile networks in the geographical area of interest constitutes an accurate estimation of the overall distribution of inbound roamers over the mobile networks in the given area.

As already explained here above, transposed messages indirectly indicate that a subscriber is present or was present recently in the geographical area of interest. The subscriber may have returned to his home network, may have moved to a different geographical area where he/she is again roaming, but most likely still resides in the geographical area of interest and is roaming there with a different mobile network.

In embodiments of the method for outbound/inbound roaming market share estimation according to the present invention, defined by claim 9, the steps j-m are repeated iteratively.

Indeed, just like the technique for outbound roaming market share estimation, the technique for inbound roaming market share estimation may be executed iteratively to improve the accuracy and adapt the market shares to eventual changes. The iterations may be executed periodically or upon request of a mobile operator or inter-operator carrier.

In embodiments of the method for outbound/inbound roaming market share estimation according to the present invention, defined by claim 10, the steps j-m are repeated daily.

Hence, in a particular implementation of the invention the inbound roaming market share estimation is updated daily.

Embodiments of the method for outbound/inbound roaming market share estimation according to the present invention, defined by claim 11, further comprise generating an initial inbound market share estimation prior to execution of steps j-m and thereto comprise:
- monitoring direct signalling to/from mobile subscribers, wherein direct signalling is any signalling event to and/or from mobile subscribers in a mobile communication network in the geographical area; and
- analysing the direct signalling to obtain an initial distribution of roaming mobile subscribers in the geographical area over the mobile communication networks.

Indeed, prior to the iterative method to estimate the inbound roaming market shares based on active location polling for a set of subscribers obtained through collection of transposed signalling, the method according to the invention may produce an initial inbound market share estimation based on direct signalling. Such direct signalling is accessible to an inter-operator carrier for mobile subscribers residing in the mobile network of a customer operator, i.e. an operator for which the inter-operator carrier is handling the international traffic, entirely or partially. From the direct signalling a first estimate of the inbound roaming market shares can be generated, similar to existing prior art methods, albeit with a lower accuracy. This is because selection of direct signals will be influenced by the way the inter-operator carrier routes the signalling.

Similar to prior art solutions cited in the introductory part of this patent application, the initial inbound roaming market share estimation may be obtained through analysing any signalling event.

In embodiments of the method for outbound/inbound roaming market share estimation according to the present invention, defined by claim 12, step k comprises:
- filtering out mobile subscribers that were roaming in the geographical area but have moved back to their home network;
- filtering out mobile subscribers that were roaming in the geographical area but are now roaming in a different geographical area; and
- selecting a random subset of remaining mobile subscribers roaming in the geographical area.

As explained above, the transposed signalling indicates that mobile subscribers are likely inbound roaming in the geographical area under consideration. It is however advantageous to remove mobile subscribers that are no longer inbound roaming before the active location polling is done. Mobile subscribers for which signalling indicates they have moved back to their home network for instance are preferably removed from the sample set that is used for active location polling. An inter-operator carrier may have knowledge on such subscribers if the inter-operator carrier is carrying international traffic for the home network operator of such subscriber. Similarly, mobile subscribers that have left the geographical area of interest and are now roaming in a different geographical area preferably are removed from the sample set that is used for active location polling. An inter-operator carrier may have knowledge on such subscribers if the inter-operator carrier is carrying international traffic for the home network operator of such subscriber or for the network operator where the subscriber is roaming in the new geographical area. By filtering out such subscribers a more relevant list or database of subscribers that are likely roaming in the geographical area of interest is maintained. For the inbound roaming market share estimation, a random selection of the remaining subscribers may then constitute the sample set that is used for active location polling. The size of the sample set shall be chosen in function of the time interval wherein the estimation must be made, the required accuracy, and eventual other parameters.

In embodiments of the method for outbound/inbound roaming market share estimation according to the present invention, defined by claim 13, the step k comprises excluding polled mobile subscribers for a certain period of time from being polled again.

Indeed, like explained here above in relation to the technique for outbound roaming market share estimation, polled subscribers may also temporarily be excluded from being polled again for inbound roaming market share estimation. This brings the advantage that the method is less privacy intrusive and the additional signalling from/to a single subscriber resulting from the present method is restricted. Also, high profile subscribers can be filtered out of the list of inbound roamers that will be polled.

In embodiments of the method for outbound/inbound roaming market share estimation according to the present invention, defined by claim 14, step I comprises one of:
- sending the location request from a Location Based Service node selected by an operator of a mobile communications network in the geographical area;
- sending the location request from a Location Based Service node selected by an inter-operator carrier of traffic from/to a mobile communications network in the geographical area; or
- sending the location request from a Location Based Service node operated by an inter-operator carrier of traffic from/to a mobile communications network in the geographical area who acts as Location Based Service provider.

Indeed, in preferred embodiments of the present invention Location Based Service or LBS based polling is used to obtain information on the current location of a frequent roamer. LBS based polling involves sending a location query message from an LBS node to the potential inbound roamer. The LBS node receives the reply to this location query message and thereupon must report the reply to the facility that calculates the inbound roaming market shares, e.g. a statistics processor with an inter-operator carrier. For the LBS node, three options exist: the LBS node may be selected by a mobile network operator active in the geographical area of interest, the LBS node may be selected by the inter-operator carrier, or the LBS node may be operated by the inter-operator carrier acting as LBS service provider.

In addition to a method for outbound/inbound roaming market share estimation, the present invention also relates to a corresponding system for outbound/inbound roaming market share estimation by an inter-operator carrier as defined by claim 15, wherein the inter-operator carrier operates an interconnect facility that interconnects mobile communication networks, the system being adapted to estimate the distribution of outbound roamers of a home mobile communication network over visited mobile communication networks in one or more geographical area, wherein the inter-operator carrier has a contract with at least one of the visited mobile communication networks to handle a percentage of its international traffic, the system comprising:
a. a processor adapted to connect to a database containing frequent roamer information for subscribers of the home mobile communication network, the frequent roamer information comprising a frequent roamer score for subscribers of the home mobile communication network and a status of a subscriber that changes for a predetermined time period from non-frequent roamer to frequent roamer when the frequent roamer score exceeds a predetermined threshold;
b. a sample set generator adapted to generate a sample set of frequent outbound roamers of the home mobile communication network from the frequent roamer information;
c. a Location Based Service proxy configured to instruct one or more Location Based Service node to poll each mobile subscriber in the sample set of frequent outbound roamers with a location request, wherein a location request is a query message to the mobile subscriber requesting to reply with location details;
d. a signalling analyser adapted to analyse replies to the location request received from the sample set of frequent outbound roamers to determine therefrom geographical areas and visited mobile communication networks wherein the frequent outbound roamers of the sample set are located; and
e. a relative market share estimator adapted to determine a relative distribution of outbound roamers of the home mobile communication network across geographical areas and/or visited mobile communication networks from analysis of the replies received as the percentage of frequent outbound roamers in the sample set of frequent outbound roamers located respectively in the geographical areas and/or visited mobile communication networks.

Embodiments of the system for outbound/inbound roaming market share estimation according to the present invention, defined by claim 16, are adapted to estimate a distribution of inbound roamers over mobile communication networks in a given geographical area, and thereto comprise:
f. an event processor with connectivity to a database of a mobile communications network in the geographical area to collect therefrom transposed signalling, wherein transposed signalling is signalling to/from a mobile communication network in the given geographical area, the signalling being visible for an inter-operator carrier and indirectly indicating that mobile subscribers are present in the geographical area, the transposed signalling comprising Location Update Failure messages and/or Cancel Location messages and/or Diameter messages sent to and/or from mobile subscribers in a mobile communication network in said geographical area;
g. a sample set generator adapted to generate a sample set of the mobile subscribers from the transposed signalling;
h. a Location Based Service proxy configured to instruct one or more Location Based Service node to poll each mobile subscriber in the sample set with a location request; and
i. a market share analyser adapted to analyse replies to the location request received from the sample set of subscribers to obtain a distribution of the sample set of subscribers over the mobile communication networks.

### Brief Description of the Drawings

Fig. 1 illustrates a situation wherein the outbound roaming market share is estimated for outbound roamers of home network H;
Fig. 2 is a functional block scheme of an embodiment of the system according to the present invention configured to estimate the outbound roaming market share for home network H in Fig. 1;
Fig. 3 is a table showing the relative distribution of outbound roamers of home network H of Fig. 1, as estimated by the system of Fig. 2;
Fig. 4 is a table showing the actual volume distribution of Short Message Service (SMS) messages sent by outbound roamers of home network H, as estimated by the system of Fig. 2;
Fig. 5 illustrates a situation wherein the inbound roaming market share is estimated for geographical area AREA;
Fig. 6 is a functional block scheme of an embodiment of the system according to the present invention configured to estimate the inbound roaming market share for area AREA in Fig. 5;
Fig. 7 shows tables illustrating the iterative boosting of the inbound roaming market share estimation for the networks N1, N2 and N3 operational in the geographical area AREA of Fig. 5; and
Fig. 8 shows a computing system suitable for hosting the system for outbound/inbound roaming market share estimation according to the present invention, and suitable for implementing the method for outbound/inbound roaming market share estimation according to the present invention.

### Detailed Description of Embodiment(s)

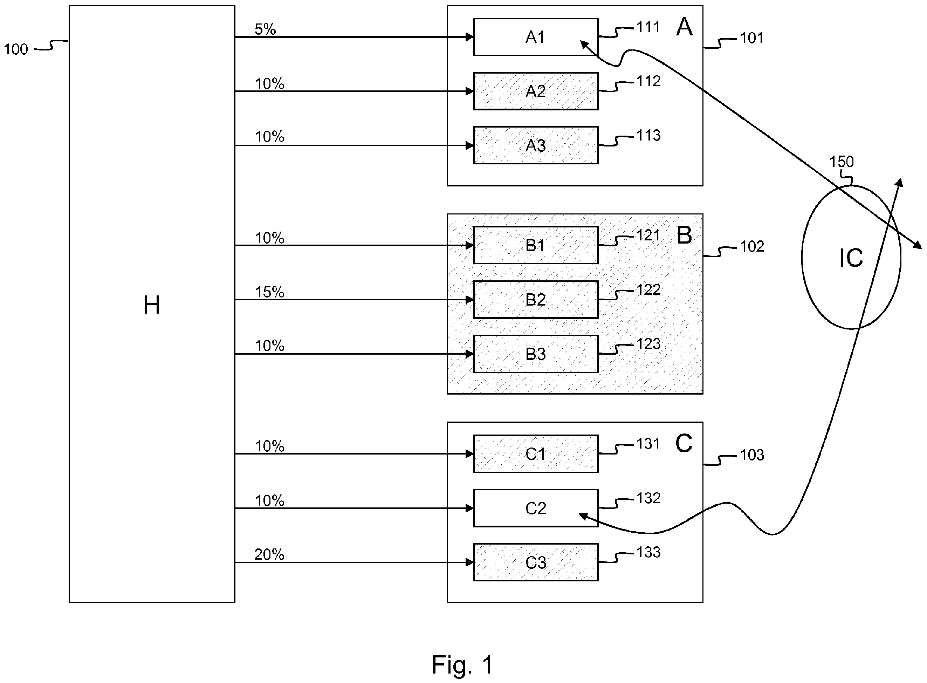

Fig. 1 illustrates a situation wherein the operator of home network H or 100 desires to obtain an estimate of the outbound roaming market share, i.e. the volume of roaming traffic that subscribers of home network 100 that are roaming in geographical areas A or 101, B or 102 and C or 103, are generating and the respective distributions of these volumes of roaming traffic across the different mobile networks that are active in these areas A, B and C. The operator of network H desires to obtain the outbound roaming market share estimate from an inter-operator carrier IC or 150. It is assumed that in each of the geographical areas A, B and C three mobile networks are available, respectively operated by three different operators. In geographical area A, networks A1 or 111, A2 or 112, and A3 or 113 are available. In geographical area B, networks B1 or 121, B2 or 122 and B3 or 123 are available. In geographical area C, networks C1 or 131, C2 or 132 and C3 or 133 are available. It is further assumed that the inter-operator carrier 150 only has a view on network A1 in area A and on network C2 in area C because inter-operator carrier 150 has an agreement in place with the operator of network A1 to handle 50 % of the international traffic thereof and an agreement in place with the operator of network C2 to handle 30 % of the international traffic thereof. The inter-operator carrier 150 in other words has no visibility on networks A2 and A3 in area A, on networks C1 and C3 in area C, and has no visibility at all on area B.

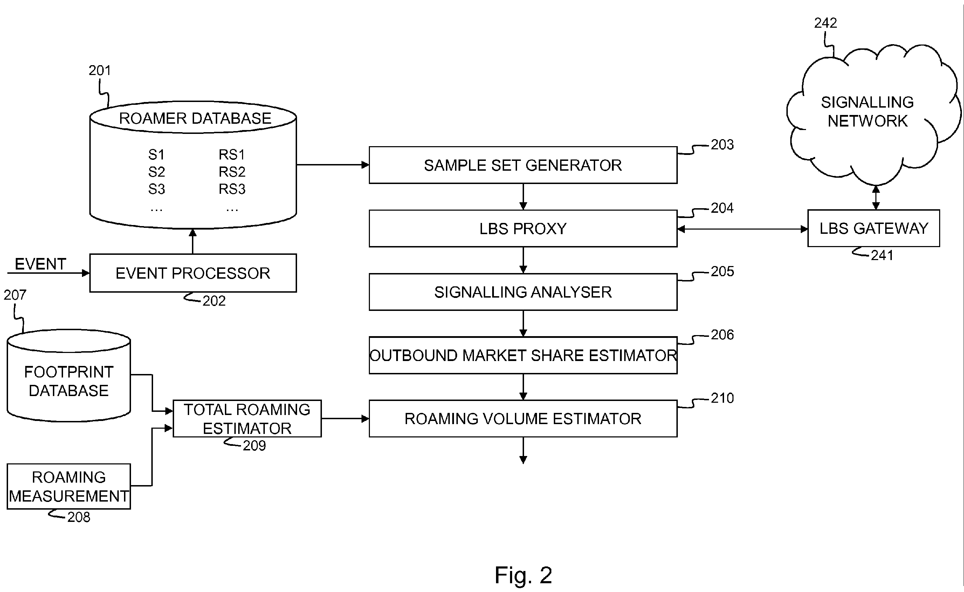

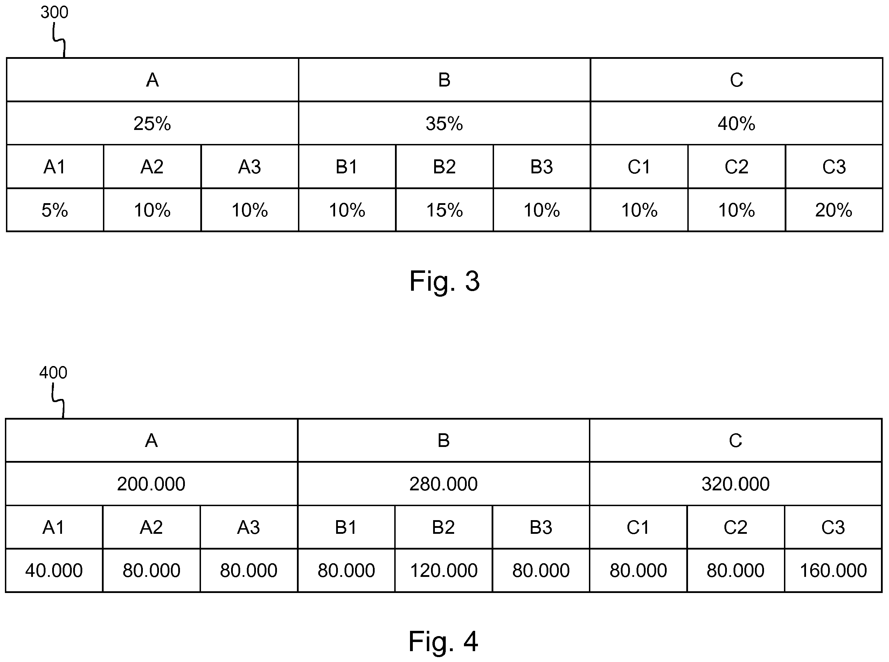

Fig. 2 shows the functional blocks of the system configured with inter-operator carrier 150 to estimate the outbound roaming market share for network H, despite the limited visibility this inter-operator carrier 150 has. The inter-operator carrier 150 thereto maintains a frequent roamer database 201. Herein, a list of subscribers S1, S2, S3, ... of network H is maintained, and for each of these subscribers a corresponding frequent roaming score RS1, RS2, RS3, ... is maintained. Thereto, an event processor 202 monitors and analyses any signalling event, denoted EVENT in Fig. 2. For each subscriber, the number of roaming events is monitored. If the number of roaming events in the past three months exceeds a certain threshold, e.g. at least 2 roaming events, the status of that subscriber is changed to "frequent roamer" in the frequent roamer database 201. As soon as the roaming activity of a subscriber drops again to less than 2 roaming events over a time span of for instance 3 months, the status of the subscriber is again changed to "non-frequent roamer". At regular time intervals, for instance daily, the system depicted in Fig. 2 shall provide an update of the outbound roaming market share estimate. Thereto, sample set generator 203 shall extract a sample set of frequent roamers of network H from the database 201. This sample set of frequent roamers will be polled actively for its location. Thereto, Location Based Services (LBS) proxy 204 instructs a Location Based Services (LBS) gateway 241 to send location query messages over signalling network 242 towards the frequent roaming subscribers of network H that form part of the sample set generated by 203. The replies to these location query messages received by LBS gateway 241 are shared with LBS proxy 204 and forwarded to signalling analyser 205 for further analysis. The signalling analyser 205 determines the geographical area and the visited mobile network from the reply to the location query sent to each frequent roamer in the sample set. From the information extracted by the signalling analyser 205, the outbound market share estimator 206 can determine the relative distribution of the frequent roamers in the sample set across the different geographical areas A, B and C, and within these areas across the different available visited networks A1, A2, A3, B1, B2, B3, C1, C2 and C3. Thus, even for networks or areas where the inter-operator carrier 150 has no visibility on, the inter-operator carrier 150 will obtain information on the presence of frequent roaming subscribers of network H. This results in a table 300 containing information for each geographical area and each visited network therein, on the relative distribution of frequent roamers of network H therein. In the example of table 300 in Fig. 3, it is assumed that the outbound market share estimator 206 has established that 5 % of the frequent roamers in the polled sample set is present in network A1, 10 % of the frequent roamers in the polled sample set is present in network A2, 10 % of the frequent roamers in the polled sample set is present in network A3, 10% of the frequent roamers in the polled sample set is present in network B1, 15% of the frequent roamers in the polled sample set is present in network B2, 10% of the frequent roamers in the polled sample set is present in network B3, 10% of the frequent roamers in the polled sample set is present in network C1, 10% of the frequent roamers in the polled sample set is present in network C2, and 20 % of the frequent roamers in the polled sample set is present in network C3. The outbound market share estimator 206 hence also establishes an accumulated presence of 25 % of the frequent roamers in the sample set in area A, an accumulated presence of 35 % of the frequent roamers in the sample set in area B, and an accumulated presence of 40 % of the frequent roamers in the sample set in area C. Since the frequent roamers of network H are assumed to be representative for all outbound roamers of network H, the table 300 is considered to represent the actual relative distribution of outbound roamers of network H.

The roaming volume estimator 210 in the next step shall transform the relative outbound roaming share values obtained through active polling into estimates of absolute volumes of roaming traffic handled by the foreign operators. The system according to the invention thereto relies on information contained in a footprint database 207. This footprint database 207 for instance memorizes that the inter-operator carrier 150 handles 50 % of the international traffic for the operator of network A1. The amount of roaming traffic effectively handled by the inter-operator carrier 150 is measured by the roaming measurement unit 208. In the example of Fig. 4, it is for instance assumed that the roaming measurement unit 208 has measured 20.000 SMS messages sent per day from network A1 by outbound roaming subscribers of network H. Since the inter-operator carrier 150 sees only 50 % of the international traffic originating from network A1, it is consequently estimated by the total roaming estimator 209 that the total number of SMS messages sent per day from network A1 by roaming subscribers of network H is 40.000 and that the total volume of SMS traffic sent by outbound roamers of network H corresponds to 800.000 SMS messages daily. Indeed, the 40.000 SMS messages mentioned here above according to the relative outbound market share estimate correspond to 5 % of the overall SMS traffic generated by outbound roamers of network H. The overall SMS traffic generated by outbound roamers of network H consequently corresponds to 800.000 SMS messages daily. Given this information, the roaming volume estimator 210 can rely on the relative outbound roaming market share values, i.e. table 300, to generate table 400 which is an estimate of the daily outgoing SMS traffic produced by outbound roamers of network H in the geographical areas A, B and C, and more particularly in the networks A1, A2, A3, B1, B2, B3, C1, C2 and C3. From the relative distribution of outbound roamers over areas A, B and C, the roaming volume estimator 210 estimates that 25 % of 800.000 or 200.000 SMS messages are generated by outbound roamers of network H in area A daily, 35 % of 800.000 or 280.000 SMS messages are generated by outbound roamers of network H in area B daily, and 40 % of 800.000 or 320.000 SMS messages are generated by outbound roamers of network H in area C daily. At the visited network level, the roaming volume estimator 210 estimates that 5% of 800.000 or 40.000 SMS messages are sent from visited network A1 by subscribers of home network H daily, 10% of 800.000 or 80.000 SMS messages are sent from visited network A2 by subscribers of home network H daily, 10% of 800.000 or 80.000 SMS messages are sent from visited network A3 by subscribers of home network H daily, 10% of 800.000 or 80.000 SMS messages are sent from visited network B1 by subscribers of home network H daily, 15% of 800.000 or 120.000 SMS messages are sent from visited network B2 by subscribers of home network H daily, 10% of 800.000 or 80.000 SMS messages are sent from visited network B3 by subscribers of home network H daily, 10% of 800.000 or 80.000 SMS messages are sent from visited network C1 by subscribers of home network H daily, 10% of 800.000 or 80.000 SMS messages are sent from visited network C2 by subscribers of home network H daily, and 20% of 800.000 or 160.000 SMS messages are sent from visited network C3 by subscribers of home network H daily. This way, the roaming volume estimator 210 produces table 400 and gives the network operator of network H an accurate estimate of the volume of SMS traffic that is generated by its outbound roaming subscribers in the different geographical areas and the different visited networks available in these geographical areas, even for geographical areas such as B or visited networks such as A2, A3, B1, B2, B3, C1 and C3 where the inter-operator carrier 150 has no visibility on. Obviously, the roaming volume estimator 210 can make similar estimations for voice calls or other types of traffic generated by the outbound roamers of network H, and possibly generate a roaming traffic estimate per geographical area and/or visited network wherein the different types of traffic are considered with different weights or different percentages in order to produce figures representative for the actual market share, i.e. income through outbound roaming of subscribers of network H, for the different foreign operators.

It is noticed that in an alternative embodiment, the total volume of traffic generated by outbound roamers of network H also could be estimated from the inter-operator carrier's visibility on network C2, or even better from a combination of the inter-operator carrier's visibility on networks A1 and C2.

It is further noticed that in a preferred embodiment of the invention, the frequent roamers that formed part of the sample set selected by the sample set generator 203 may be excluded for some time from being polled again, to reduce the signalling overhead and eventual privacy intrusion for individual subscribers.

The active polling using different sample sets of frequent roamers may be iteratively repeated, e.g. daily, to update the relative outbound roaming market shares. The updates may replace the previous relative outbound roaming market share figures, or may be used to boost the relative outbound roaming market shares in order to enable the system to tend to converge towards a more stable state. Boosting is a technique wherein the new estimate is calculated as a function of the previous estimate and the new market share measurement obtained through active polling of a sample set.

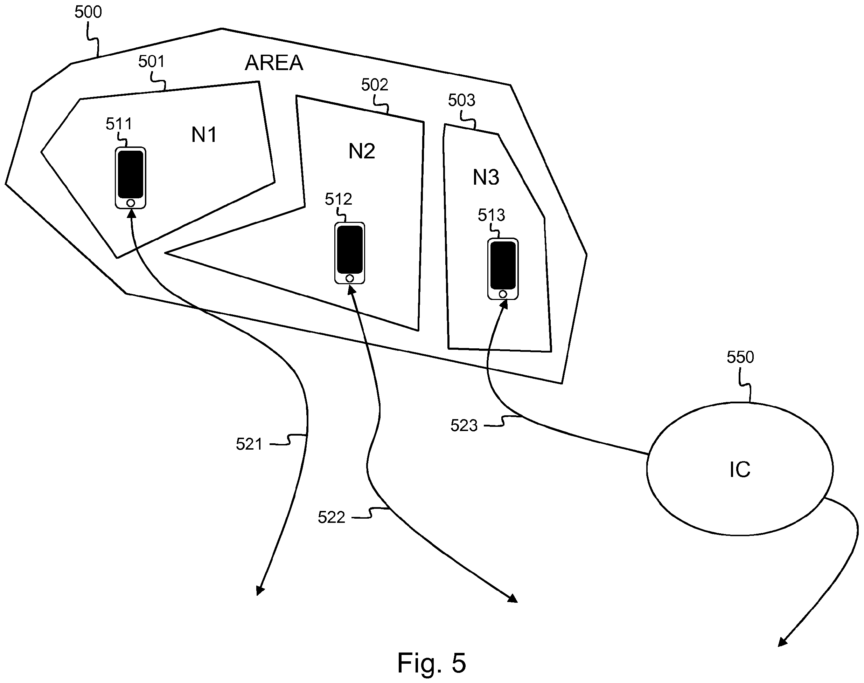

Fig. 5 shows a geographical area 500 wherein three mobile networks, N1 or 501, N2 or 502 and N3 or 503, are available. It is assumed that one of the network operators, e.g. the network operator of network N3, has requested the inter-carrier operator 550 to estimate the inbound roaming market share, i.e. an estimate of share of this network operator N3 and the shares of competing network operators of networks N1 and N2 in the inbound roaming, i.e. the handling of traffic to/from foreign mobile subscribers that are temporarily residing in the geographical area 500 and therefor roaming with one of the networks N1, N2 or N3. It is assumed however that the inter-carrier operator 550 has a limited visibility on the roaming traffic. As it is not handling the international traffic 521 for the network operator of network N1 and the international traffic 522 for the network operator of network N2, the inter-carrier operator 550 only has visibility on the international traffic 523 generated in network N3. Possibly, the inter-operator carrier 550 also has a view on international traffic generated in the networks of client operators of the inter-carrier operator 550 in geographical areas different from 500 and sent towards roaming subscribers like 511 in network N1, 512 in network N2 and 513 in network N3.

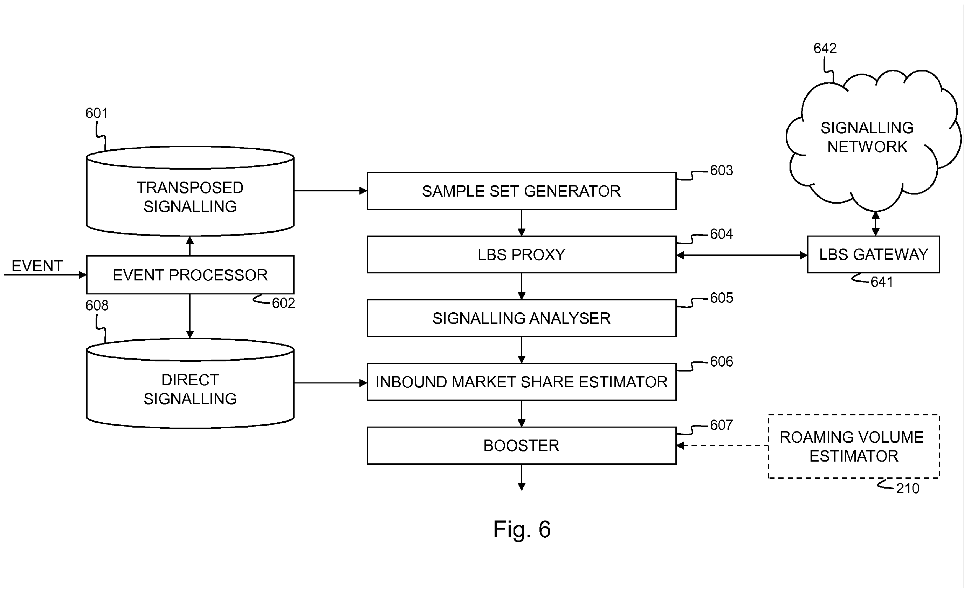

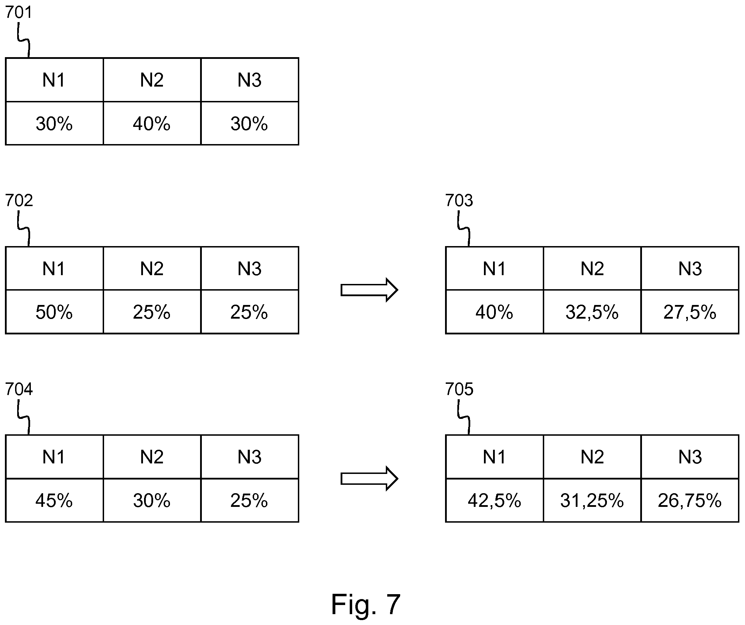

Fig. 6 shows the functional blocks of a system according to the present invention that enables the inter-carrier operator 550 to produce an accurate estimate of the inbound roaming market shares for area 500, despite the limited visibility the inter-carrier operator 550 has. In the system illustrated by Fig. 6, a direct signalling database 608 and a transposed signalling database 601 is maintained by an event processor 602 that has access to any signalling event of traffic handled by the inter-operator carrier 550, denoted EVENT in Fig. 6. The direct signalling is available for mobile subscribers roaming in the mobile network of a client operator of the inter-carrier operator 550, e.g. network N3, and for roaming subscribers in the area 500 that receive traffic coming from networks for which the inter-carrier operator is handling international traffic. The direct signalling indicates unambiguously that an inbound roamer is present in area 500 and using either network N1, network N2 or network N3. Since the inter-carrier operator 550 has a limited view on networks N1 and N2, the direct signalling can be used by the inbound market share estimator 606 to produce a first estimate of the inbound roaming market share in area 500, but in such first estimate, the market share of network N3 shall typically be overestimated. Alternatively or supplementary, as denoted in dashed lines in Fig. 6, the output of the outbound roaming volume estimator 210 of the subsystem depicted in Fig. 2 may be used to obtain a first estimate of the inbound roaming market share in area 500. In Fig. 7, table 701 shows the initial inbound market share estimate obtained on the basis of direct signalling only. According to this first estimate, 30 % of the inbound roamers in area 500 are using network N1, 40 % of the inbound roamers in area 500 are using network N2, and 30 % of the inbound roamers in area 500 are using network N3.

The transposed signalling maintained in database 601 represents signalling that indicates that subscribers are likely roaming in the geographical area 500, for instance Location Update Failure messages or Cancel Location messages seen in the signalling traffic of the network N3 where the inter-carrier operator 550 has visibility on. Such messages indicate that a mobile subscriber is likely present in the geographical area 500, and consequently likely roaming with one of the available networks, N1 or N2, where the inter-carrier operator 550 has no or limited visibility on. The sample set generator 603 at regular time intervals, e.g. daily, generates a sample set of subscribers that are likely present in geographical area 500 based on the information contained in the transposed signalling database 601. The Location Based Services (LBS) proxy 604 instructs a Location Based Services (LBS) gateway to send a location query over signalling network 642 to the subscribers in the sample set and to collect the replies to these location requests. The replies to the location requests are forwarded to the signalling analyser 605 which extracts information indicative for the geographical area wherein the subscribers of the sample set are residing and information indicative for the (visited) network where the subscribers of the sample set are connected to. This information is shared with the inbound market share estimator 606 which determines the relative distribution of subscribers in the sample set over the networks available in the geographical area of interest 500. Alternatively or supplementary, as denoted in dashed lines in Fig. 6, the output of the outbound roaming volume estimator 210 of the subsystem depicted in Fig. 2 may be used by the inbound market share estimator 606. In a first iteration, it is assumed that the inbound market share estimator 606 establishes that 50 % of the inbound roamers in the sample set are connecting with network N1, 25 % of the inbound roamers in the sample set are connecting with network N2, and 25 % of the inbound roamers in the sample set are connecting with network N3. The booster 607 is using the data of table 702 to boost the inbound market share estimates 701 that were obtained through analysis of the direct signalling. The boosting results in a new estimate, depicted in table 703: the inbound roaming market share of network N1 is increased to 40 %, the inbound roaming market share of network N2 is decreased to 32,5 % and the inbound roaming market share of network N3 is decreased to 27,5 %. In a further iteration, sample set generator 603 selects a new sample set of subscribers likely roaming in area 500. The subscribers in this sample set are again polled by LBS proxy 604 for their location and the signalling analyser 605 derives from the replies if the subscribers are in area 500 and with which available network they are connecting. This results in a distribution of the subscribers in the sample set over networks N1, N2 and N3 depicted by table 704: 45 % of the inbound roamers in the sample set are connecting with network N1, 30 % of the inbound roamers in the sample set are connecting with network N2 and 25 % of the inbound roamers in the sample set are connecting with network N3. The booster 607 uses table 704 to boost the previous estimate 703. As a consequence, a new inbound roaming share estimate, depicted in table 705, is produced: in the new estimate, the share of inbound roamers connecting with network N1 is further increased to 42,5 %, the share of inbound roamers connecting with network N2 is decreased to 31,25 % and the share of inbound roamers connecting with network N3 is further decreased to 26,75 %. By iteratively updating the inbound market share estimation, e.g. daily, the estimate will converge and become more stable.

It is noticed that boosting is applied to allow modelling the distribution as a function of the previous result and the active probing on an intelligently selected sample set of subscribers. Boosting in other words applies a correction to the market share estimates following a previous result. The boosting function may consider parameters such as confidence intervals for indirectly observed traffic, the type of event observed, etc. to further enhance the accuracy of the model. The initial distribution however has to be obtained without boosting. Thereto, signalling footprint data may be used, i.e. commercial or marketing information available for instance from contracts in place between an inter-carrier operator and customer operators of mobile networks, or direct signalling may be used to produce an initial distribution.

It is further noticed that although sample sets of subscribers are generated from transposed signalling in the above example, the transposed signalling may be combined with direct signalling in preferred embodiments of the invention to generate sample sets for active location polling.

Furthermore, it is noticed that embodiments of the present invention may combine outbound roaming market share estimation and inbound roaming market share estimation. The systems depicted in Fig. 2 and Fig. 6 may thereto be integrated. The frequent roamer database 201, the direct signalling database 608 and the transposed signalling database 601 may for instance be integrated in a single database that is kept updated by an event processor that monitors any signalling event for all traffic handled by an inter-operator carrier, denoted EVENT in Fig. 6. Since such inter-operator carrier typically handles large volumes of traffic from operators/networks all over the world, the scale of such database further improves the accuracy and reliability of the outbound/inbound roaming market share estimates. The sample set generator 203 and sample set generator 603 can also be integrated into a single component as their role in respectively the outbound roaming market share estimation and the inbound roaming market share estimation is comparable, namely to produce a sample set of roaming subscribers from information contained in the database updated by the event processor. Similarly, the LBS proxy 204 can be integrated with the LBS proxy 604, and this single integrated LBS proxy may use the same LBS node for polling roaming subscribers in the sample set. In other words, LBS gateway 241 and LBS gateway 641 may represent a single node that receives instructions from the integrated LBS proxy. Also the signalling analyser 205 and signalling analyser 605 may be integrated in a single component. The function of these two signal analysers is identical, i.e. to extract information indicative for the visited area and visited network from replies to the location queries sent to the roaming subscribers in the generated sample sets. At last, also the outbound market share estimator 206, the roaming volume estimator 210 and the inbound market share estimator 606 may be integrated into a single component, e.g. a processor programmed to make the necessary calculations on the information extracted from the location query replies by the signalling analyser. For both the outbound and inbound market share estimations, a boosting algorithm may be applied as explained here above. The booster component 607 drawn in Fig. 6 hence may fulfil the role of boosting both the outbound and inbound roaming market share estimates in an integrated platform, and thereto apply a single or different boosting algorithms. The enhanced ability to integrate the outbound market share estimation and inbound market share estimation is an important advantage of the present invention over existing systems.

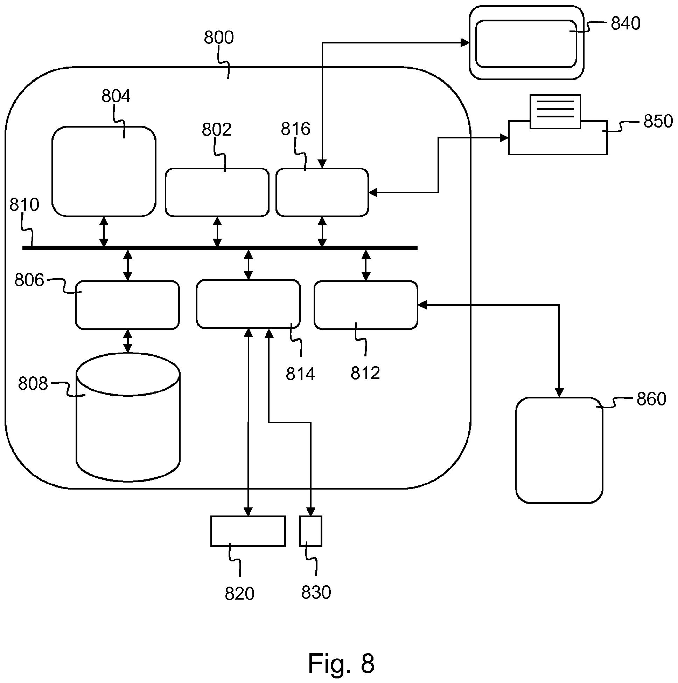

Fig. 8 shows a suitable computing system 800 for hosting the system for outbound/inbound roaming market share estimation according to the invention, embodiments of which are drawn in Fig. 2 and Fig. 6. Computing system 800 may in general be formed as a suitable general purpose computer and comprise a bus 810, a processor 802, a local memory 804, one or more optional input interfaces 814, one or more optional output interfaces 816, a communication interface 812, a storage element interface 806 and one or more storage elements 808. Bus 810 may comprise one or more conductors that permit communication among the components of the computing system. Processor 802 may include any type of conventional processor or microprocessor that interprets and executes programming instructions. Local memory 804 may include a random access memory (RAM) or another type of dynamic storage device that stores information and instructions for execution by processor 802 and/or a read only memory (ROM) or another type of static storage device that stores static information and instructions for use by processor 804. Input interface 814 may comprise one or more conventional mechanisms that permit an operator to input information to the computing device 800, such as a keyboard 820, a mouse 830, a pen, voice recognition and/or biometric mechanisms, etc. Output interface 816 may comprise one or more conventional mechanisms that output information to the operator, such as a display 840, a printer 850, a speaker, etc. Communication interface 812 may comprise any transceiver-like mechanism such as for example two 1Gb Ethernet interfaces that enables computing system 800 to communicate with other devices and/or systems, for example mechanisms for communicating with one or more other computing systems. The communication interface 812 of computing system 800 may be connected to such another computing system 860 by means of a local area network (LAN) or a wide area network (WAN), such as for example the internet, in which case the other computing system 860 may for example comprise a suitable web server. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example 1TB SATA disk drives, and control the reading and writing of data to and/or from these storage elements 808. Although the storage element 808 above is described as a local disk, in general any other suitable computer-readable media such as a removable magnetic disk, optical storage media such as a CD or DVD, -ROM disk, solid state drives, flash memory cards, ... could be used.

The steps executed in the method for outbound/inbound roaming market share estimation according to the present invention, illustrated by the above embodiments, may be implemented as programming instructions stored in local memory 804 of the computing system 800 for execution by its processor 802. Alternatively the instructions may be stored on the storage element 808 or be accessible from another computing system 860 through the communication interface 812.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for outbound/inbound roaming market share estimation executed by an inter-operator carrier, wherein said inter-operator carrier is an interconnect facility that interconnects mobile communication networks, comprising estimation of the distribution of outbound roamers (300; 400) of a home mobile communication network (H) over visited mobile communication networks (A1, A2, A3, B1, B2, B3, C1, C2, C3) in one or more geographical area (A, B, C), wherein said inter-operator carrier has a contract with at least one of said visited mobile communication networks (A1, A2, A3, B1, B2, B3, C1, C2, C3) to handle a percentage of its international traffic, said method comprising:
a. maintaining frequent roamer information (RS1, RS2, RS3, ...) for subscribers (S1, S2, S3, ...) of said home mobile communication network (H) comprising maintaining a frequent roamer score (RS1, RS2, RS3, ...) for subscribers (S1, S2, S3, ...) of said home mobile communication network (H) and changing status of a subscriber for a predetermined time period from non-frequent roamer to frequent roamer when said frequent roamer score (RS1, RS2, RS3, ...) exceeds a predetermined threshold; wherein the frequent roamer score for a subscriber is a number of roaming events of said subscriber;
b. generating a sample set of frequent outbound roamers of said home mobile communication network (H);
c. polling each mobile subscriber in said sample set of frequent outbound roamers with a location request, wherein a location request is a query message to the mobile subscriber requesting to reply with location details;
d. analysing replies to said location request received from said sample set of frequent outbound roamers to determine therefrom geographical areas and visited mobile communication networks wherein said frequent outbound roamers of said sample set are located;
e. determining a relative distribution (300) of outbound roamers of said home mobile communication network (H) across geographical areas (A, B, C) and/or visited mobile communication networks (A1, A2, A3, B1, B2, B3, C1, C2, C3) from analysis of said replies received as the percentage of frequent outbound roamers in said sample set of frequent outbound roamers located respectively in said geographical areas (A, B, C) and/or visited mobile communication networks (A1, A2, A3, B1, B2, B3, C1, C2, C3).

2. A method for outbound/inbound roaming market share estimation according to claim 1, further comprising:
f. obtaining footprint information indicative for a percentage of ingoing/outgoing roaming traffic to/from at least one visited mobile communication network (A1, C2) that an inter-operator carrier (150) is supposed to handle according to contracts between said inter-operator carrier and its customers, the at least one visited mobile communication network (A1, A2, A3, B1, B2, B3, C1, C2, C3);
g. measuring an amount of roaming traffic to/from said at least one visited mobile communication network (A1, C2) handled by said inter-operator carrier (150), hence corresponding to said percentage;
h. determining from said percentage and said amount of roaming traffic handled by said at least one visited mobile communication network (A1, C2) a total volume of roaming traffic to/from said home mobile communication network (H) as the quotient of said amount of roaming traffic and said percentage; and
i. determining from said relative distribution (300) and said total volume of roaming traffic an absolute volume of roaming traffic (400) generated by outbound roaming subscribers of said home mobile communication network (H) in geographical areas (A, B, C) and/or in visited mobile communication networks (A1, A2, A3, B1, B2, B3, C1, C2, C3) in such geographical areas (A, B, C) as the product of said total volume and said relative distribution.

3. A method for outbound/inbound roaming market share estimation according to claim 1, wherein said predetermined time period corresponds to 3 months and said predetermined threshold corresponds to 2 roaming events in the past 3 months in one or multiple geographical areas.

4. A method for outbound/inbound roaming market share estimation according to one of the preceding claims,
wherein said steps a, b, c, d and e are repeated iteratively.

5. A method for outbound/inbound roaming market share estimation according to claim 4,
wherein said steps a, b, c, d and e are repeated daily.

6. A method for outbound/inbound roaming market share estimation according to one of the preceding claims,
wherein said step b comprises excluding polled subscribers of said home mobile communication network (H) for a certain period of time from being polled again.

7. A method for outbound/inbound roaming market share estimation according to one of the preceding claims, wherein said step c comprises one of:
- sending said location request from a Location Based Service node selected by an operator of said home mobile communication network (H);
- sending said location request from a Location Based Service node selected by an inter-operator carrier (150) handling roaming traffic to/from said home mobile communications network (H); or
- sending said location request from a Location Based Service node operated by an inter-operator carrier (150) handling roaming traffic to/from said home mobile communications network (H) who acts as Location Based Service provider.

8. A method for outbound/inbound roaming market share estimation according to one of the preceding claims, further comprising estimation of a distribution of inbound roamers (702, 703, 704, 705) over mobile communication networks (N1, N2, N3) in a given geographical area (500), comprising:
j. collecting transposed signalling, wherein transposed signalling is signalling to/from a mobile communication network in said given geographical area (500), said signalling being visible for an inter-operator carrier (150) and indirectly indicating that mobile subscribers are present and possibly roaming in said geographical area (500), said transposed signalling comprising Location Update Failure messages and/or Cancel Location messages and/or Diameter messages sent to and/or from mobile subscribers in a mobile communication network in said geographical area (500);
k. generating a sample set of said mobile subscribers from said transposed signalling;
I. polling each mobile subscriber in said sample set with a location request;
m. analysing replies to said location request received from said sample set of subscribers to obtain a distribution (702, 704) of said sample set of subscribers over said mobile communication networks.

9. A method for outbound/inbound roaming market share estimation according to claim 8,
wherein said steps j-m are repeated iteratively.

10. A method for outbound/inbound roaming market share estimation according to claim 9,
wherein said steps j-m are repeated daily.

11. A method for outbound/inbound roaming market share estimation according to one of claims 8-10, further comprising generating an initial inbound market share estimation (701) prior to execution of steps j-m and thereto comprising:
- monitoring direct signalling to/from mobile subscribers, wherein direct signalling is any signalling event to and/or from mobile subscribers in a mobile communication network in said geographical area (500) which indicates where a certain subscriber is roaming; and
- analysing said direct signalling to obtain an initial distribution (701) of roaming mobile subscribers in said geographical area over said mobile communication networks.

12. A method for outbound/inbound roaming market share estimation according to one of claims 8-11, wherein said step k comprises:
- filtering out mobile subscribers that were roaming in said geographical area (500) but have moved back to their home network;
- filtering out mobile subscribers that were roaming in said geographical area (500) but are now roaming in a different geographical area; and
- selecting a random subset of remaining mobile subscribers roaming in said geographical area.

13. A method for outbound/inbound roaming market share estimation according to one of claims 8-12,
wherein said step k comprises excluding polled mobile subscribers for a certain period of time from being polled again.

14. A method for outbound/inbound roaming market share estimation according to one of claims 8-13, wherein said step I comprises one of:
- sending said location request from a Location Based Service node selected by an inter-operator carrier (550) of traffic from/to a mobile communications network (N3) in said geographical area (500); or
- sending said location request from a Location Based Service node operated by an inter-operator carrier (550) of traffic from/to a mobile communications network (N3) in said geographical area (500) who acts as Location Based Service provider.

15. A system for outbound/inbound roaming market share estimation comprising an inter-operator carrier, wherein said inter-operator carrier is an interconnect facility that interconnects mobile communication networks, comprising estimation of the distribution of outbound roamers (300; 400) of a home mobile communication network (H) over visited mobile communication networks (A1, A2, A3, B1, B2, B3, C1, C2, C3) in one or more geographical area (A, B, C), wherein said inter-operator carrier has a contract with at least one of said visited mobile communication networks (A1, A2, A3, B1, B2, B3, C1, C2, C3) to handle a percentage of its international traffic, said system further comprising:
a. a processor (202) adapted to connect to a database maintained by the inter-operator carrier and (201) containing frequent roamer information (RS1, RS2, RS3, ...) for subscribers (S1, S2, S3, ...) of said home mobile communication network (H), said frequent roamer information comprising a frequent roamer score (RS1, RS2, RS3, ...) for subscribers (S1, S2, S3, ...) of said home mobile communication network (H) and a status of a subscriber that changes for a predetermined time period from non-frequent roamer to frequent roamer when said frequent roamer score (RS1, RS2, RS3, ...) exceeds a predetermined threshold; wherein the frequent roamer score for a subscriber is a number of roaming events of said subscriber;
b. a sample set generator (203) adapted to generate a sample set of frequent outbound roamers of said home mobile communication network (H) from said frequent roamer information (RS1, RS2, RS3, ...);
c. a Location Based Service proxy (204) configured to instruct one or more Location Based Service node (241) to poll each mobile subscriber in said sample set of frequent outbound roamers with a location request, wherein a location request is a query message to said mobile subscriber requesting to reply with location details;
d. a signalling analyser (205) adapted to analyse replies to said location request received from said sample set of frequent outbound roamers to determine therefrom geographical areas and visited mobile communication networks wherein said frequent outbound roamers of said sample set are located; and
e. a relative market share estimator (206) adapted to determine a relative distribution (300) of outbound roamers of said home mobile communication network (H) across geographical areas (A, B, C) and/or visited mobile communication networks (A1, A2, A3, B1, B2, B3, C1, C2, C3) from analysis of said replies received as the percentage of frequent outbound roamers in said sample set of frequent outbound roamers located respectively in said geographical areas (A, B, C) and/or visited mobile communication networks (A1, A2, A3, B1, B2, B3, C1, C2, C3).

16. A system for outbound/inbound roaming market share estimation according to claim 15, comprising estimation of a distribution of inbound roamers (702, 703, 704, 705) over mobile communication networks (N1, N2, N3) in a given geographical area (500), said system comprising:
f. an event processor (602) with connectivity to a database (601) of a mobile communications network in said geographical area to collect therefrom transposed signalling, wherein transposed signalling is signalling to/from a mobile communication network in the given geographical area, said signalling being visible for an inter-operator carrier (150) and indirectly indicating that mobile subscribers are present in said geographical area (500), said transposed signalling comprises Location Update Failure messages and/or Cancel Location messages and/or Diameter messages sent to and/or from mobile subscribers in a mobile communication network in said geographical area (500);
g. a sample set generator (603) adapted to generate a sample set of said mobile subscribers from said transposed signalling;
h. a Location Based Service proxy (604) configured to instruct one or more Location Based Service node (641) to poll each mobile subscriber in said sample set with a location request; and
i. a market share analyser (605, 606) adapted to analyse replies to said location request received from said sample set of subscribers to obtain a distribution (702, 704) of said sample set of subscribers over said mobile communication networks (N1, N2, N3).

## Patentansprüche

1. Verfahren zur aus-/eingehenden Roamingmarktanteilschätzung, das durch einen Interoperatorträger ausgeführt wird, wobei der Interoperatorträger eine Zwischenverbindungseinrichtung ist, die mobile Kommunikationsnetzwerke verbindet, umfassend eine Schätzung der Verteilung ausgehender Roamer (300; 400) eines mobilen Heimkommunikationsnetzwerks (H) über besuchte mobile Kommunikationsnetzwerke (A1, A2, A3, B1, B2, B3, C1, C2, C3) in einem oder mehreren geographischen Gebieten (A, B, C), wobei der Interoperatorträger einen Vertrag mit mindestens einem der besuchten mobilen Kommunikationsnetzwerke (A1, A2, A3, B1, B2, B3, C1, C2, C3) hat, um einen Prozentsatz seines internationalen Traffics zu handhaben, wobei das Verfahren umfasst:
a. ein Pflegen häufiger Roamerinformationen (RS1, RS2, RS3, ...) für Teilnehmer (S1, S2, S3, ...) des mobilen Heimkommunikationsnetzwerks (H), umfassend ein Pflegen eines häufigen Roamerpunktwerts (RS1, RS2, RS3, ...) für Teilnehmer (S1, S2, S3, ...) des mobilen Heimkommunikationsnetzwerks (H) und ein Ändern des Status eines Teilnehmers für einen vorgegebenen Zeitraum von nicht-häufigem Roamer auf häufigen Roamer, wenn der häufige Roamerpunktwert (RS1, RS2, RS3, ...) einen vorgegebenen Schwellwert übersteigt; wobei der häufige Roamerpunktwert für einen Teilnehmer eine Anzahl von Roamingereignissen des Teilnehmers ist;
b. ein Generieren eines Beispielsatzes häufiger ausgehender Roamer des mobilen Heimkommunikationsnetzwerks (H);
c. ein Befragen jedes mobilen Teilnehmers in dem Beispielsatz häufiger ausgehender Roamer mit einer Standortanfrage, wobei eine Standortanfrage eine Fragemitteilung an den mobilen Teilnehmer ist, mit der er aufgefordert wird, mit Standortdetails zu antworten;
d. ein Analysieren von auf die vom Beispielsatz ausgehender häufiger Roamer empfangenen Antworten auf die Standortanfrage, um daraus geographische Gebiete und besuchte mobile Kommunikationsnetzwerke zu bestimmen, in dem die häufigen ausgehenden Roamer des Beispielsatzes lokalisiert sind;
e. ein Bestimmen einer relativen Verteilung (300) ausgehender Roamer des mobilen Heimkommunikationsnetzwerks (H) über geographische Gebiete (A, B, C) und/oder besuchte mobile Kommunikationsnetzwerke (A1, A2, A3, B1, B2, B3, C1, C2, C3) aus einer Analyse der empfangenen Antworten als der Prozentsatz häufiger ausgehender Roamer in dem Beispielsatz häufiger ausgehender Roamer, die jeweils in den geographischen Gebieten (A, B, C) und/oder besuchten mobilen Kommunikationsnetzwerken (A1, A2, A3, B1, B2, B3, C1, C2, C3) lokalisiert sind.

2. Verfahren zur aus-/eingehenden Roamingmarktanteilschätzung nach Anspruch 1, ferner umfassend:
f. ein Erhalten von Fußabdruckinformationen, die einen Prozentsatz eingehenden/ausgehenden Roamingtraffics zu/von mindestens einem besuchten mobilen Kommunikationsnetzwerk (A1, C2) anzeigen, bei denen davon ausgegangen wird, dass ein Interoperatorträger (150) sie gemäß Verträgen zwischen dem Interoperatorträger und seinen Kunden handhabt, das mindestens eine besuchte Kommunikationsnetzwerk (A1, A2, A3, B1, B2, B3, C1, C2, C3);
g. ein Messen einer Menge von Roamingtraffic zum/von dem mindestens einen besuchten Kommunikationsnetzwerk (A1, C2), der durch den Interoperatorträger (150) gehandhabt wird, somit entsprechend dem Prozentsatz;
h. ein Bestimmen aus dem Prozentsatz und der Menge des von dem mindestens einen besuchten mobilen Kommunikationsnetzwerk (A1, C2) gehandhabten Roamingtraffics eines Gesamtvolumens von Roamingtrafffic zum/vom mobilen Heimkommunikationsnetzwerk (H) als den Quotienten der Menge des Roamingtraffics und des Prozentsatzes; und
i. ein Bestimmen aus der relativen Verteilung (300) und des Gesamtvolumens von Roamingtraffic eines absoluten Roamingtraffics (400), der durch ausgehende Roamingteilnehmer des mobilen Heimkommunikationsnetzwerks (H) in geographischen Gebieten (A, B, C) und/oder in besuchten mobilen Kommunikationsnetzwerken (A1, A2, A3, B1, B2, B3, C1, C2, C3) in solchen geographischen Gebieten (A, B, C) generiert wird, als das Produkt des Gesamtvolumens der relativen Verteilung.

3. Verfahren zur aus-/eingehenden Roamingmarktanteilschätzung nach Anspruch 1, wobei der vorgegebene Zeitraum 3 Monaten entspricht und der vorgegebene Schwellwert 2 Roamingereignissen in den vergangenen 3 Monaten in einem oder mehreren geographischen Gebieten entspricht.

4. Verfahren zur aus-/eingehenden Roamingmarktanteilschätzung nach einem der vorangehenden Ansprüche, wobei die Schritte a, b, c, d und e iterativ wiederholt werden.

5. Verfahren zur aus-/eingehenden Roamingmarktanteilschätzung nach Anspruch 4, wobei die Schritte a, b, c, d und e täglich wiederholt werden.

6. Verfahren zur aus-/eingehenden Roamingmarktanteilschätzung nach einem der vorangehenden Ansprüche, wobei Schritt b ein Ausschließen befragter Teilnehmer des mobilen Kommunikationsnetzwerks (H) für einen bestimmten Zeitraum von einer erneuten Befragung umfasst.

7. Verfahren zur aus-/eingehenden Roamingmarktanteilschätzung nach einem der vorangehenden Ansprüche, wobei Schritt c eines der Folgenden umfasst:
- ein Senden der Standortanfrage von einem standortbasierten Dienstknoten, der von einem Bediener des mobilen Heimkommunikationsnetzwerks (H) ausgewählt wird;
- ein Senden der Standortanfrage von einem standortbasierten Dienstknoten, der von einem Interoperatorträger (150) ausgewählt wird, der Roamingtraffic zum/vom mobilen Heimkommunikationsnetzwerk (H) handhabt; oder
- ein Senden der Standortanfrage von einem standortbasierten Dienstknoten, der von einem Interoperatorträger (150) bedient wird, der Traffic zum/vom mobilen Heimkommunikationsnetzwerk (H) handhabt, der als standortbasierter Dienstanbieter auftritt.

8. Verfahren zur aus-/eingehenden Roamingmarktanteilschätzung nach einem der vorangehenden Ansprüche, ferner umfassend eine Schätzung einer Verteilung eingehender Roamer (702, 703, 704, 705) über mobile Kommunikationsnetzwerke (N1, N2, N3) in einem gegebenen geographischen Gebiet (500), umfassend:
j. ein Sammeln transponierter Signalgebung, wobei transponierte Signalgebung Signalgebung zu/von einem mobilen Kommunikationsnetzwerk im gegebenen geographischen Gebiet (500) ist, wobei die Signalgebung für einen Interoperatorträger (150) sichtbar ist und indirekt anzeigt, dass in dem geographischen Gebiet (500) mobile Teilnehmer vorhanden sind und möglicherweise roamen, wobei die transponierte Signalgebung Standortaktualisierungsfehlermitteilungen und/oder Standortstornierungsmitteilungen und/oder Durchmessermitteilungen, die an und/oder von mobilen Teilnehmern in einem mobilen Kommunikationsnetzwerk im geographischen Gebiet (500) gesendet werden, umfasst;
k. ein Generieren eines Beispielsatzes der mobilen Teilnehmer aus der transponierten Signalgebung;
l. ein Befragen jedes mobilen Teilnehmers im Beispielssatz mit einer Standortanfrage;
m. ein Analysieren von Antworten auf die Standortanfrage, die vom Beispielsatz von Teilnehmern empfangen wurden, um eine Verteilung (702, 704) des Beispielsatzes von Teilnehmern über die mobilen Kommunikationsnetzwerken zu erhalten.

9. Verfahren zur aus-/eingehenden Roamingmarktanteilschätzung nach Anspruch 8, wobei die Schritte j-m iterativ wiederholt werden.

10. Verfahren zur aus-/eingehenden Roamingmarktanteilschätzung nach Anspruch 9, wobei die Schritte j-m täglich wiederholt werden.

11. Verfahren zur aus-/eingehenden Roamingmarktanteilschätzung nach einem der Ansprüche 8 bis 10, ferner umfassend ein Generieren einer initialen eingehenden Marktanteilschätzung (701) vor der Ausführung von Schritten j-m, und dazu umfassend:
- ein Überwachen direkter Signalgebung zu/von mobilen Teilnehmern, wobei die direkte Signalgebung jedes Signalgebungsereignis zu und/oder von mobilen Teilnehmern in einem mobilen Kommunikationsnetzwerk im geographischen Gebiet (500) ist, die anzeigt, wo ein ein bestimmter Teilnehmer roamt; und
- ein Analysieren der direkten Signalgebung, um eine initiale Verteilung (701) roamender mobiler Teilnehmer in dem geographischen Gebiet über die mobilen Kommunikationsnetzwerke zu erhalten.

12. Verfahren zur aus-/eingehenden Roamingmarktanteilschätzung nach einem der Ansprüche 8 bis 11, wobei Schritt k umfasst:
- ein Ausfiltern mobiler Teilnehmer, die in dem geographischen Gebiet (500) geroamt haben, aber sich zu ihrem Heimnetzwerk zurückbewegt haben;
- ein Ausfiltern mobiler Teilnehmer, die in dem geographischen Gebiet (500) geroamt haben, aber jetzt in einem anderen geographischen Gebiet roamen; und
- ein Ausfiltern eines zufälligen Untersatzes von mobilen Teilenehmern, die weiter in dem geographischen Gebiet roamen.

13. Verfahren zur aus-/eingehenden Roamingmarktanteilschätzung nach einem der Ansprüche 8 bis 12, wobei Schritt k ein Ausschließen befragter mobiler Teilnehmer für einen bestimmten Zeitraum von einer erneuten Befragung umfasst.

14. Verfahren zur aus-/eingehenden Roamingmarktanteilschätzung nach einem der Ansprüche 8 bis 13, wobei Schritt l eines der Folgenden umfasst:
- ein Senden der Standortanfrage von einem standortbasierten Dienstknoten, der von einem Interoperatorträger (550) ausgewählt wird, von Traffic zu/von einem mobilen Kommunikationsnetzwerk (N3) im geographischen Gebiet (500); oder
- ein Senden der Standortanfrage von einem standortbasierten Dienstknoten, der von einem Interoperatorträger (550) bedient wird, von Traffic von/zu einem mobilen Kommunikationsnetzwerk (N3) in einem geographischen Gebiet (500), der als standortbasierter Dienstanbieter auftritt.

15. System zur aus-/eingehenden Roamingmarktanteilschätzung, das einen Interoperatorträger umfasst, wobei der Interoperatorträger eine Zwischenverbindungseinrichtung ist, die mobile Kommunikationsnetzwerke verbindet, umfassend eine Schätzung der Verteilung ausgehender Roamer (300; 400) eines mobilen Heimkommunikationsnetzwerks (H) über besuchte mobile Kommunikationsnetzwerke (A1, A2, A3, B1, B2, B3, C1, C2, C3) in einem oder mehreren geographischen Gebieten (A, B, C), wobei der Interoperatorträger einen Vertrag mit mindestens einem der besuchten mobilen Kommunikationsnetzwerke (A1, A2, A3, B1, B2, B3, C1, C2, C3) hat, um einen Prozentsatz seines internationalen Traffics zu handhaben, wobei das System ferner umfasst:
a. einen Prozessor (202), der angepasst ist, um sich mit einer Datenbank zu verbinden, die vom Interoperatorträger gepflegt wird und (201) häufige Roamerinformationen (RS1, RS2, RS3, ...) für Teilnehmer (S1, S2, S3, ...) des mobilen Heimkommunikationsnetzwerks (H) enthält, wobei die häufigen Roamerinformationen einen häufigen Roamerpunktwert (RS1, RS2, RS3, ...) für Teilnehmer (S1, S2, S3, ...) des mobilen Heimkommunikationsnetzwerks (H) und einen Status eines Teilnehmers enthalten, der sich für einen vorgegebenen Zeitraum von nicht-häufigem Roamer auf häufigen Roamer ändert, wenn der häufige Roamerpunktwert (RS1, RS2, RS3, ...) einen vorgegebenen Schwellwert übersteigt; wobei der häufige Roamerpunktwert für einen Teilnehmer eine Anzahl von Roamingereignissen des Teilnehmers ist;
b. einen Beispielsatzgenerator (203), der angepasst ist, um einen Beispielsatz häufiger ausgehender Roamer des mobilen Heimkommunikationsnetzwerks (H) aus den häufigen Roamerinformationen (RS1, RS2, RS3, ....) zu generieren;
c. einen standortbasierten Dienstproxy (204), der konfiguriert ist, um einen oder mehrere standortbasierte Knoten (241) anzuweisen, jeden mobilen Teilnehmer in dem Beispielsatz häufiger ausgehender Roamer mit einer Standortanfrage zu befragen, wobei eine Standortanfrage eine Fragemitteilung an den mobilen Teilnehmer ist, mit der er aufgefordert wird, mit Standortdetails zu antworten;
d. einen Signalgebungsanalysator (205), der angepasst ist, um Antworten auf die Standortanfrage, die vom Beispielsatz ausgehender häufiger Roamer empfangenen werden, zu analysieren, um daraus geographische Gebiete und besuchte mobile Kommunikationsnetzwerke zu bestimmen, in dem die häufigen ausgehenden Roamer des Beispielsatzes lokalisiert sind; und
e. einen relativen Marktanteilschätzer (206), der angepasst ist, um eine relative Verteilung (300) ausgehender Roamer des mobilen Heimkommunikationsnetzwerks (H) über geographische Gebiete (A, B, C) und/oder besuchte mobile Kommunikationsnetzwerke (A1, A2, A3, B1, B2, B3, C1, C2, C3) aus einer Analyse der empfangenen Antworten als der Prozentsatz häufiger ausgehender Roamer in dem Beispielsatz häufiger ausgehender Roamer, die jeweils in den geographischen Gebieten (A, B, C) und/oder besuchten mobilen Kommunikationsnetzwerken (A1, A2, A3, B1, B2, B3, C1, C2, C3) lokalisiert sind, zu bestimmen.

16. System zur aus-/eingehenden Roamingmarktanteilschätzung nach Anspruch 15, umfassend eine Schätzung einer Verteilung eingehender Roamer (702, 703, 704, 705) über mobile Kommunikationsnetzwerke (N1, N2, N3) in einem gegebenen geographischen Gebiet (500), wobei das System umfasst:
f. einen Ereignisprozessor (602) mit Konnektivität zu einer Datenbank (601) eines mobilen Kommunikationsnetzwerks im geographischen Gebiet, um daraus transponierte Signalgebung zu sammeln, wobei transponierte Signalgebung Signalgebung zu/von einem mobilen Kommunikationsnetzwerk im gegebenen geographischen Gebiet ist, wobei die Signalgebung für einen Interoperatorträger (150) sichtbar ist und indirekt anzeigt, dass in dem geographischen Gebiet (500) mobile Teilnehmer vorhanden sind, wobei die transponierte Signalgebung Standortaktualisierungsfehlermitteilungen und/oder Standortstornierungsmitteilungen und/oder Durchmessermitteilungen umfasst, die an und/oder von mobilen Teilnehmern in einem mobilen Kommunikationsnetzwerk im geographischen Gebiet (500) gesendet werden;
g. einen Beispielsatzgenerator (603), der angepasst ist, um einen Beispielsatz der mobilen Teilnehmer aus der transponierten Signalgebung zu generieren;
h. einen standortbasierten Dienstproxy (604), der konfiguriert ist, um einen oder mehrere standortbasierte Dienstknoten (641) anzuweisen, jeden mobilen Teilnehmer im Beispielsatz mit einer Standortanfrage zu befragen; und
i. einen Marktanteilanalysator (605, 606), der angepasst ist, um Antworten auf die Standortanfrage zu analysieren, die vom Beispielsatz von Teilnehmern empfangen wurden, um eine Verteilung (702, 704) des Beispielsatzes von Teilnehmern über die mobilen Kommunikationsnetzwerken (N1, N2, N3) zu erhalten.

## Revendications

1. Procédé permettant l'estimation de part de marché d'itinérance sortante/entrante exécuté par un support inter-opérateurs, ledit support inter-opérateurs étant une installation d'interconnexion qui interconnecte des réseaux de communication mobiles, comprenant l'estimation de la distribution d'abonnés itinérants sortants (300 ; 400) d'un réseau de communication mobile domestique (H) sur les réseaux de communication mobiles visités (A1, A2, A3, B1, B2, B3, C1, C2, C3) dans une ou plusieurs zones géographiques (A, B, C), ledit support inter-opérateurs possédant un contrat avec au moins l'un desdits réseaux de communication mobiles visités (A1, A2, A3, B1, B2, B3, C1, C2, C3) pour gérer un pourcentage de son trafic international, ledit procédé comprenant :
a. la conservation des informations d'abonnés itinérants fréquents (RS1, RS2, RS3, ...) pour les abonnés (S1, S2, S3, ...) dudit réseau de communication mobile domestique (H) comprenant la conservation d'un score d'abonné itinérant fréquent (RS1, RS2, RS3, ...) pour les abonnés (S1, S2, S3, ...) dudit réseau de communication mobile domestique (H) et le changement de statut d'un abonné, pour une période de temps prédéfinie, d'abonné itinérant non fréquent à abonné itinérant fréquent lorsque ledit score d'abonné itinérant fréquent (RS1, RS2, RS3, ...) dépasse un seuil prédéfini ; ledit score d'abonné itinérant fréquent pour un abonné étant un nombre d'événements d'itinérance dudit abonné ;
b. la génération d'un ensemble d'échantillons d'abonnés itinérants sortants fréquents dudit réseau de communication mobile domestique (H) ;
c. l'interrogation de chaque abonné mobile dans ledit ensemble d'échantillons d'abonnés itinérants sortants fréquents avec une demande de localisation, une demande de localisation étant un message de requête à l'abonné mobile demandant de répondre avec des détails de localisation ;
d. l'analyse des réponses à ladite demande de localisation reçues en provenance dudit ensemble d'échantillons d'abonnés itinérants sortants fréquents pour déterminer à partir de celles-ci des zones géographiques et des réseaux de communication mobiles visités dans lesquels sont situés lesdits abonnés itinérants sortants fréquents dudit ensemble d'échantillons ;
e. la détermination d'une distribution relative (300) d'abonnés itinérants sortants dudit réseau de communication mobile domestique (H) à travers les zones géographiques (A, B, C) et/ou les réseaux de communication mobiles visités (A1, A2, A3, B1, B2, B3, C1, C2, C3) à partir de l'analyse desdites réponses reçues sous forme la forme du pourcentage d'abonnés itinérants sortants fréquents dans ledit ensemble d'échantillons d'abonnés itinérants sortants fréquents situés respectivement dans lesdites zones géographiques (A, B, C) et/ou les réseaux de communication mobiles visités (A1, A2, A3, B1, B2, B3, C1, C2, C3).

2. Procédé permettant l'estimation de part de marché d'itinérance sortante/entrante selon la revendication 1, comprenant en outre :
f. l'obtention des informations d'empreinte indiquant un pourcentage du trafic itinérant entrant/sortant vers/à partir d'au moins un réseau de communication mobile visité (A1, C2) qu'un support inter-opérateurs (150) est censé gérer selon les contrats entre ledit support inter-opérateurs et ses clients, le au moins un réseau de communication mobile visité (A1, A2, A3, B1, B2, B3, C1, C2, C3) ;
g. la mesure d'une quantité de trafic d'itinérance vers/à partir dudit au moins un réseau de communication mobile visité (A1, C2) géré par ledit support inter-opérateurs (150), correspondant ainsi audit pourcentage ;
h. la détermination à partir dudit pourcentage et de ladite quantité de trafic d'itinérance géré par ledit au moins un réseau de communication mobile visité (A1, C2) d'un volume total de trafic d'itinérance vers/depuis ledit réseau de communication mobile domestique (H) sous la forme de quotient de ladite quantité de trafic d'itinérance et dudit pourcentage ; et
i. la détermination à partir de ladite distribution relative (300) et dudit volume total de trafic d'itinérance d'un volume absolu de trafic d'itinérance (400) généré par des abonnés d'itinérance sortants dudit réseau de communication mobile domestique (H) dans des zones géographiques (A, B, C) et/ou dans des réseaux de communication mobiles visités (A1, A2, A3, B1, B2, B3, C1, C2, C3) dans ces zones géographiques (A, B, C) sous la forme du produit dudit volume total et de ladite distribution relative.

3. Procédé permettant l'estimation de part de marché d'itinérance sortante/entrante selon la revendication 1, ladite période de temps prédéfinie correspondant à 3 mois et ledit seuil prédéfini correspondant à 2 événements d'itinérance au cours des 3 derniers mois dans une ou plusieurs zones géographiques.

4. Procédé permettant l'estimation de part de marché d'itinérance sortante/entrante selon l'une des revendications précédentes, lesdites étapes a, b, c, d et e étant répétées de manière itérative.

5. Procédé permettant l'estimation de part de marché d'itinérance sortante/entrante selon la revendication 4, lesdites étapes a, b, c, d et e étant répétées quotidiennement.

6. Procédé permettant l'estimation de part de marché d'itinérance sortante/entrante selon l'une des revendications précédentes, ladite étape b comprenant l'exclusion des abonnés interrogés dudit réseau de communication mobile domestique (H) durant une certaine période de temps d'une nouvelle interrogation.

7. Procédé permettant l'estimation de part de marché d'itinérance sortante/entrante selon l'une des revendications précédentes, ladite étape c comprenant l'un de :
- l'envoi de ladite demande de localisation à partir d'un nœud de service géodépendant choisi par un opérateur dudit réseau de communication mobile domestique (H) ;
- l'envoi de ladite demande de localisation à partir d'un nœud de service géodépendant choisi par un support inter-opérateurs (150) gérant le trafic d'itinérance vers/à partir dudit réseau de communication mobile domestique (H) ; ou
- l'envoi de ladite demande de localisation à partir d'un nœud de service géodépendant exploité par un support inter-opérateurs (150) gérant le trafic itinérant vers/à partir dudit réseau de communication mobile domestique (H) qui agit en tant que fournisseur de service géodépendant.

8. Procédé permettant l'estimation de la part de marché d'itinérance sortante/entrante selon l'une des revendications précédentes, comprenant en outre l'estimation d'une distribution d'abonnés itinérants entrants (702, 703, 704, 705) sur des réseaux de communication mobiles (N1, N2, N3) dans une zone géographique donnée (500), comprenant :
j. la réception de la signalisation transposée, ladite signalisation transposée signalant vers/à partir d'un réseau de communication mobile dans ladite zone géographique donnée (500), ladite signalisation étant visible pour un support inter-opérateurs (150) et indiquant indirectement que des abonnés mobiles sont présents et éventuellement en itinérance dans ladite zone géographique (500), ladite signalisation transposée comprenant des messages d'échec de mise à jour de localisation et/ou des messages d'annulation de localisation et/ou des messages de diamètre envoyés vers et/ou à partir d'abonnés mobiles dans un réseau de communication mobile dans ladite zone géographique (500) ;
k. la génération d'un ensemble d'échantillons desdits abonnés mobiles à partir de ladite signalisation transposée ;
l. l'interrogation de chaque abonné mobile dans ledit ensemble d'échantillons avec une demande de localisation ;
m. l'analyse des réponses à ladite demande de localisation reçues en provenance dudit ensemble d'échantillons d'abonnés pour obtenir une distribution (702, 704) dudit ensemble d'échantillons d'abonnés sur lesdits réseaux de communication mobiles.

9. Procédé permettant l'estimation de part de marché d'itinérance sortante/entrante selon la revendication 8, lesdites étapes j-m étant répétées de manière itérative.

10. Procédé permettant l'estimation de part de marché d'itinérance sortante/entrante selon la revendication 9, lesdites étapes j-m étant répétées quotidiennement.

11. Procédé permettant l'estimation de part de marché d'itinérance sortante/entrante selon l'une des revendications 8 à 10, comprenant en outre la génération d'une estimation initiale de part de marché entrante (701) avant l'exécution des étapes j-m et comprenant à ce sujet :
- la surveillance de la signalisation directe vers/à partir des abonnés mobiles, ladite signalisation directe étant tout événement de signalisation vers et/ou à partir des abonnés mobiles dans un réseau de communication mobile dans ladite zone géographique (500) qui indique où un certain abonné est en itinérance ; et
- l'analyse de ladite signalisation directe pour obtenir une distribution initiale (701) d'itinérance d'abonnés mobiles dans ladite zone géographique sur lesdits réseaux de communication mobiles.

12. Procédé permettant l'estimation de part de marché d'itinérance sortante/entrante selon l'une des revendications 8 à 11, ladite étape k comprenant :
- le filtrage des abonnés mobiles qui étaient en itinérance dans ladite zone géographique (500) mais qui sont revenus sur leur réseau domestique ;
- le filtrage des abonnés mobiles qui étaient en itinérance dans ladite zone géographique (500) mais qui sont maintenant en itinérance dans une zone géographique différente ; et
- le choix d'un sous-ensemble aléatoire d'abonnés mobiles restants étant en itinérance dans ladite zone géographique.

13. Procédé permettant l'estimation de part de marché d'itinérance sortante/entrante selon l'une des revendications 8 à 12, ladite étape k comprenant l'exclusion des abonnés mobiles interrogés pendant une certaine période de temps d'une nouvelle interrogation.

14. Procédé permettant l'estimation de part de marché d'itinérance sortante/entrante selon l'une des revendications 8 à 13, ladite étape l comprenant l'un de :
- l'envoi de ladite demande de localisation à partir d'un nœud de service géodépendant choisi par un support inter-opérateurs (550) de trafic à partir/vers un réseau de communication mobile (N3) dans ladite zone géographique (500) ; ou
- l'envoi de ladite demande de localisation à partir d'un nœud de service géodépendant exploité par un support inter-opérateurs (550) de trafic à partir/vers un réseau de communication mobile (N3) dans ladite zone géographique (500) qui agit en tant que fournisseur de service géodépendant.

15. Système destiné à l'estimation de part de marché d'itinérance sortante/entrante comprenant un support d'inter-opérateurs, ledit support d'inter-opérateurs étant une installation d'interconnexion qui interconnecte des réseaux de communication mobiles, comprenant l'estimation de la distribution d'abonnés itinérants sortants (300 ; 400) d'un réseau de communication mobile domestique (H) sur des réseaux de communication mobiles visités (A1, A2, A3, B1, B2, B3, C1, C2, C3) dans une ou plusieurs zones géographiques (A, B, C), ledit support inter-opérateurs possédant un contrat avec au moins l'un desdits réseaux de communication mobiles visités (A1, A2, A3, B1, B2, B3, C1, C2, C3) pour gérer un pourcentage de son trafic international, ledit système comprenant en outre :
a. un processeur (202) adapté pour se connecter à une base de données maintenue par le support inter-opérateurs et (201) contenant des informations d'abonnés itinérants fréquents (RS1, RS2, RS3, ...) pour les abonnés (S1, S2, S3, ...) dudit réseau de communication mobile domestique (H), lesdites informations d'abonnés itinérants fréquents comprenant un score d'abonné itinérant fréquent (RS1, RS2, RS3, ...) pour les abonnés (S1, S2, S3, ...) dudit réseau de communication mobile domestique (H) et un état d'un abonné qui change, pendant une période de temps prédéfinie, d'abonné itinérant non fréquent à abonné itinérant fréquent lorsque ledit score d'abonné itinérant fréquent (RS1, RS2, RS3, ...) dépasse un seuil prédéfini ; ledit score d'abonné itinérant fréquent pour un abonné étant un nombre d'événements d'itinérance dudit abonné ;
b. un générateur d'ensemble d'échantillons (203) adapté pour générer un ensemble d'échantillons d'abonnés itinérants sortants fréquents dudit réseau de communication mobile domestique (H) à partir desdites informations d'abonnés itinérants fréquents (RS1, RS2, RS3, ...) ;
c. un proxy de service géodépendant (204) configuré pour commander à un ou plusieurs nœuds de service géodépendant (241) d'interroger chaque abonné mobile dans ledit ensemble d'échantillons d'abonnés itinérants sortants fréquents avec une demande de localisation, une demande de localisation étant un message de requête audit abonné mobile demandant de répondre avec les détails de la localisation ;
d. un analyseur de signalisation (205) adapté pour analyser les réponses à ladite demande de localisation reçues en provenance dudit ensemble d'échantillons d'abonnés itinérants sortants fréquents pour déterminer à partir de celles-ci des zones géographiques et des réseaux de communication mobiles visités dans lesquelles sont situés lesdits abonnés itinérants sortants fréquents dudit ensemble d'échantillons ; et
e. un estimateur de part de marché relative (206) adapté pour déterminer une distribution relative (300) des abonnés itinérants sortants dudit réseau de communication mobile domestique (H) à travers des zones géographiques (A, B, C) et/ou des réseaux de communication mobiles visités (A1, A2, A3, B1, B2, B3, C1, C2, C3) à partir de l'analyse desdites réponses reçues sous la forme du pourcentage des abonnés itinérants sortants fréquents dans ledit ensemble d'échantillons d'abonnés itinérants sortants fréquents situés respectivement dans lesdites zones géographiques (A, B, C) et/ou des réseaux de communication mobiles visités (A1, A2, A3, B1, B2, B3, C1, C2, C3).

16. Système destiné à l'estimation de part de marché d'itinérance sortante/entrante selon la revendication 15, comprenant l'estimation d'une distribution d'abonnés itinérants entrants (702, 703, 704, 705) sur des réseaux de communication mobiles (N1, N2, N3) dans une zone géographique donnée (500), ledit système comprenant :
f. un dispositif de traitement d'événements (602) avec une connectivité à une base de données (601) d'un réseau de communication mobile dans ladite zone géographique pour collecter à partir de celle-ci une signalisation transposée, ladite signalisation transposée signalant vers/à partir d'un réseau de communication mobile dans la zone géographique donnée, ladite signalisation étant visible pour un support inter-opérateurs (150) et indiquant indirectement que des abonnés mobiles sont présents dans ladite zone géographique (500), ladite signalisation transposée comprenant des messages d'échec de mise à jour de localisation et/ou des messages d'annulation de localisation et/ou des messages de diamètre envoyés vers et/ou à partir d'abonnés mobiles dans un réseau de communication mobile dans ladite zone géographique (500) ;
g. un générateur d'ensemble d'échantillons (603) adapté pour générer un ensemble d'échantillons desdits abonnés mobiles à partir de ladite signalisation transposée ;
h. un proxy de service géodépendant (604) configuré pour commander à un ou plusieurs nœuds de service géodépendant (641) d'interroger chaque abonné mobile dans ledit ensemble d'échantillons avec une demande de localisation ; et
i. un analyseur de parts de marché (605, 606) adapté pour analyser les réponses à ladite demande de localisation reçues en provenance dudit ensemble d'échantillons d'abonnés pour obtenir une distribution (702, 704) dudit ensemble d'échantillons d'abonnés sur lesdits réseaux de communication mobiles (N1, N2, N3).
